# EUROPEAN PATENT APPLICATION

(11) **EP 4 510 708 A1**
(43) Date of publication of application: **19.02.2025**
(21) Application number: 22937390.7
(22) Date of filing: 12.04.2022
(51) Int. Cl.: H04W 48/16, H04W 4/42, H04W 8/18

(54) **NETWORK DEVICE AND WIRELESS BASE STATION**

(71) Applicant: NTT DOCOMO, INC., Tokyo 100-6150 (JP)
(72) Inventor: MIN Tianyang, Tokyo 100-6150 (JP); TANIGUCHI Masato, Tokyo 100-6150 (JP); NISHIMURA Kei, Tokyo 100-6150 (JP); KITAZAWA Shinichirou, Tokyo 100-6150 (JP)
(74) Representative: Hoffmann Eitle
(86) International application number: PCT/JP2022/017628
(87) International publication number: WO 2023/199411

(57) **Abstract**

A network device receives, from a network, a message including subscriber information relating to a subscriber of a terminal for a transportation mobile communication system, and prioritizes processing relating to the terminal in a control plane over other terminals based on the subscriber information.

## Description

### TECHNICAL FIELD

The present disclosure relates to a network device and a radio base station that support communication in a transportation mobile communication system such as an FRMCS.

### BACKGROUND ART

The 3rd Generation Partnership Project (3GPP) has prepared a specification for Long Term Evolution (LTE) and the 5th generation mobile communication system (which may be called 5G, New Radio (NR), or Next Generation (NG)), and is also in the process of specifying the next generation called Beyond 5G, 5G Evolution, or 6G.

For example, a future railway mobile communication system (FRMCS) has been studied (NON-PATENT LITERATURE 1). The FRMCS is expected to support important communications such as a railway emergency communication, an automatic train protection system (ATP), and an automatic train operation system (ATO).

### CITATION LIST

### NON-PATENT LITERATURE

NON-PATENT LITERATURE 1: 3GPP TR 22.889 V17.4.0, 3rd Generation Partnership Project; Technical Specification Group Services and System Aspects; Study on Future Railway Mobile Communication System; Stage 1 (Release 17), 3GPP, March 2021

### SUMMARY OF THE INVENTION

When providing the FRMCS using a public land mobile network (PLMN) provided by communication carriers, there are the following problems. Specifically, it is necessary to reliably support important FRMCS communications as described above within the PLMN.

However, in a control plane, it is difficult to prioritize signaling of an FRMCS terminal (user equipment, UE) over signaling of general communication.

Therefore, the following disclosure has been made in view of such circumstances, and an object of the present disclosure is to provide a network device and a radio base station that is capable of reliably supporting important communications in a transportation mobile communication system when providing the transportation mobile communication system such as FRMCS by utilizing PLMN.

An aspect of the present disclosure is a network device (network device 40) including: a reception unit (user management unit 43) that receives, from a network, a message including subscriber information relating to a subscriber of a terminal for a transportation mobile communication system; and a control unit (control unit 47) that prioritizes processing relating to the terminal in a control plane over other terminals based on the subscriber information.

An aspect of the present disclosure is a radio base station (gNB 100) including: a reception unit (connection processing unit 120) that receives, from a terminal, a message including access information relating to access from the terminal for a transportation mobile communication system; and a control unit (control unit 140) that prioritizes processing relating to the terminal in a control plane over other terminals based on the access information.

An aspect of the present disclosure is a terminal (UE 200) including: a control unit (control 240) that controls transmission of a request message of a random access channel or a radio resource control layer; and a transmission unit (connection processing unit 220) that transmits, to a radio base station, the request message including a reason indication indicating that communication for a transportation mobile communication system is a reason for the request message.

An aspect of the present disclosure is a terminal (UE 200) including: a control unit (control 240) that controls transmission of a random access channel; and a transmission unit (connection processing unit 220) that transmits the random access channel using resources for the random access channel secured for a transportation mobile communication system.

An aspect of the present disclosure is a radio communication method including: a step of controlling transmission of a request message of a random access channel or a radio resource control layer; and a step of transmitting, to a radio base station, the request message including a reason indication indicating that communication for a transportation mobile communication system is a reason for the request message.

An aspect of the present disclosure is a radio communication method including: a step of controlling transmission of a random access channel; and a step of transmitting the random access channel using resources for the random access channel secured for a transportation mobile communication system.

### BRIEF DESCRIPTION OF THE DRAWINGS

[FIG. 1] FIG. 1 is an overall schematic diagram of a radio communication system 10.
[FIG. 2] FIG. 2 is a functional block diagram of a network device 40.
[FIG. 3] FIG. 3 is a functional block diagram of a gNB 100.
[FIG. 4] FIG. 4 is a functional block diagram of UE 200.
[FIG. 5] FIG. 5 is a diagram illustrating a sequence example of a registration procedure according to operation example 1.
[FIG. 6] FIG. 6 is a diagram illustrating an example of Nudm_SDM specific Data Types.
[FIG. 7] FIG. 7 is a diagram illustrating a sequence example of the registration procedure (RA procedure) according to the operation example 1.
[FIG. 8] FIG. 8 is a diagram illustrating a sequence example of a registration procedure (RA procedure) according to operation example 2.
[FIG. 9] FIG. 9 is a diagram illustrating a sequence example of a TAU procedure according to the operation example 2.
[FIG. 10] FIG. 10 is a diagram illustrating a sequence example of an RRC resume procedure according to the operation example 2.
[FIG. 11] FIG. 11 is a diagram illustrating a sequence example of a handover procedure according to operation example 3.
[FIG. 12] FIG. 12 is a diagram illustrating an example of a hardware configuration of the network device 40, the gNB 100, and the UE 200.
[FIG. 13] FIG. 13 is a diagram illustrating an example of a configuration of a vehicle 2001.

### DESCRIPTION OF EMBODIMENTS

Embodiments will be described below with reference to the drawings. Note that the same or similar reference numerals have been attached to the same functions and configurations, and the description thereof will be omitted as appropriate.

### (1) Overall schematic configuration of radio communication system

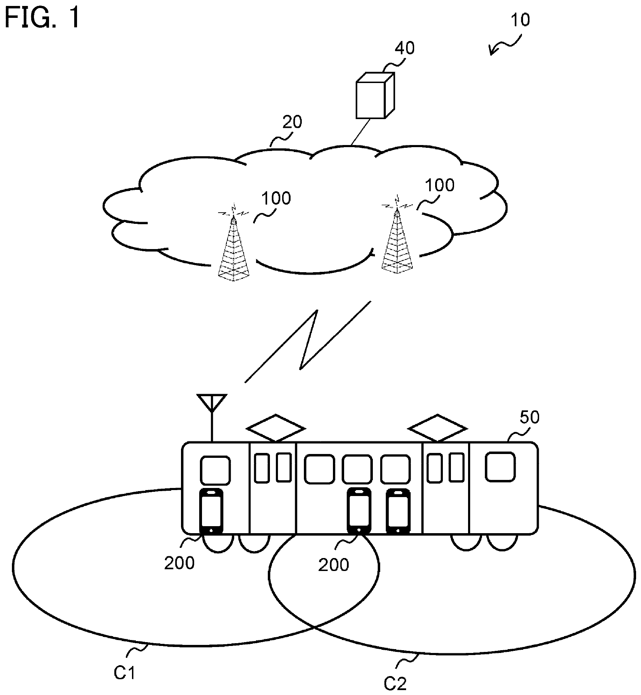

FIG. 1 is an overall schematic diagram of a radio communication system 10 according to a present embodiment. The radio communication system 10 is a radio communication system according to 5G New Radio (NR), and includes a Next Generation-Radio Access Network 20 (hereinafter, NG-RAN 20) and a terminal 200 (User Equipment 200, hereinafter, UE 200).

The radio communication system 10 may be a radio communication system according to a system called Beyond 5G, 5G Evolution, or 6G, or may include a radio communication system according to a system called Long Term Evolution (LTE) or 4G. The radio communication system 10 may support functions relating to Industrial Internet of Things (IIoT) and URLLC (Ultra-Reliable and Low Latency Communications) .

The radio communication system 10 may provide a public land mobile network (PLMN). The radio communication system 10 (PLMN) may support communications in a transportation mobile communication system.

In the present embodiment, the radio communication system 10 (PLMN) supports a future railway mobile communication system (may be called "FRMCS"). The FRMCS is described in 3GPP TR 22.889, and may include important communications such as a railway emergency communication, an automatic train protection system (ATP), and an automatic train operation system (ATO). The UE 200 for the FRMCS and general UE 200 other than the FRMCS can be mixed.

The FRMCS may be intended for use in railways, but is not necessarily limited to for use in railways. For example, a transportation system such as a bus or a tram may be used.

A vehicle 50 is a railway vehicle in which a user having the UE 200 can board and alight from. The UE 200 for the FRMCS may be mounted on the vehicle 50.

The NG-RAN 20 includes a radio base station 100 (hereinafter, gNB 100). The specific configuration of the radio communication system 10 including the number of gNBs (or eNBs) and UEs is not limited to the example illustrated in FIG. 1.

The NG-RAN 20 actually includes a plurality of NG-RAN nodes, specifically gNBs (or ng-eNBs), and is connected to a core network (5GC, not illustrated) according to 5G. In 5GC, the concept of CUPS (Control and User Plane Separation) may be introduced, which clearly separates the functions of a user plane and a control plane.

Access and Mobility Management Function (AMF) which is included in the system architecture of 5G and provides the access and mobility management functions of the UE 200 may be connected to the NG-RAN 20, and further Session Management Function (SMF) which provides the session management functions may be connected to the NG-RAN 20. In addition, UDM/UDR (Unified Data Management/User Data Repository) may be connected to the AMF and/or SMF.

In the UDM, the concept of UDC (User Data Convergence) may be introduced, which separates the UDR for holding and managing subscriber information from the front-end unit for processing the subscriber information.

These devices (functions) may be called a network device 40. The NG-RAN 20 and the 5GC may be expressed simply as a "network".

The gNB 100 is a radio base station according to NR and performs radio communication according to the UE 200 and NR. Note that the gNB 100 may be configured of a CU (central unit) and a DU (distributed unit), and the DU may be separated from the CU and installed in a geographically different position. Further, the gNBs 100 (gNB-CU) may be connected by an Xn interface.

By controlling radio signals transmitted from multiple antenna elements, the gNB 100 and UE 200 can support Massive MIMO which generates a more directional beam BM, carrier aggregation (CA) which uses multiple component carriers (CCs) bundled together, dual connectivity (DC) which simultaneously performs communication between the UE and multiple NG-RAN nodes, and the like.

The gNB 100 and the UE 200 can perform handover between cells. For example, the gNB 100 and the UE 200 can perform handover between the cells C1 and C2. The UE 200 mounted on the vehicle 50 may perform handover between cells C1 and C2 as the vehicle 50 travels (the UE 200 moves).

Further, the UE 200 mounted on the vehicle 50 may update a tracking area (TA) as the vehicle 50 travels (the UE 200 moves) . The TA may be configured of one or more cells, and may be interpreted as a cell unit indicating the position of the UE 200 that is managed on the network. The TA may be called a RAN based notification area.

Further, in the present embodiment, communication for the FRMCS may be given priority over communication for the UE 200 (general or normal UE) other than the UE 200 for the FRMCS in the radio communication system 10 (PLMN). Specifically, in the control plane, signaling of the UE 200 for the FRMCS may be given priority over signaling for general communication. In addition, in the user plane, signaling of the UE 200 for the FRMCS may be given priority over signaling for general communication.

In the present embodiment, signaling in the control plane may include transmission and reception of radio resource control layer (RRC) messages and/or transmission and reception of random access procedure (RA procedure) messages.

### (2) Functional block configuration of radio communication system

Next, a functional block configuration of the radio communication system 10 will be described. Specifically, the functional block configuration of the network device 40, the gNB 100, and the UE 200 will be described.

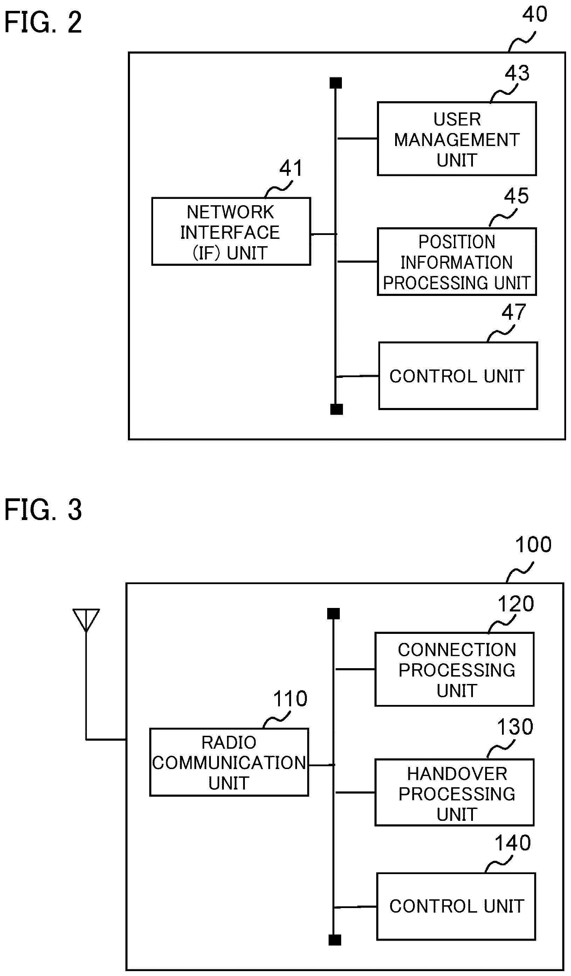

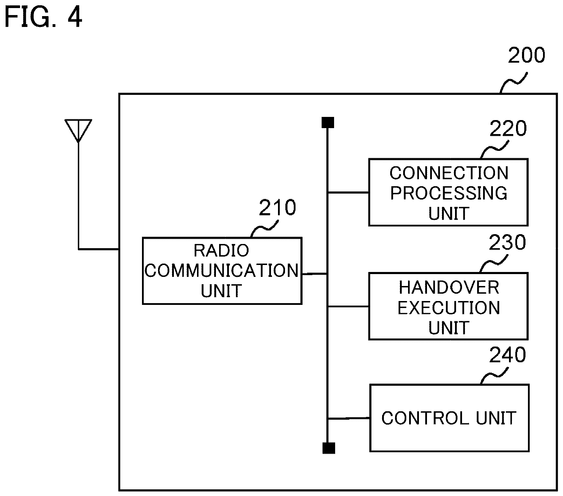

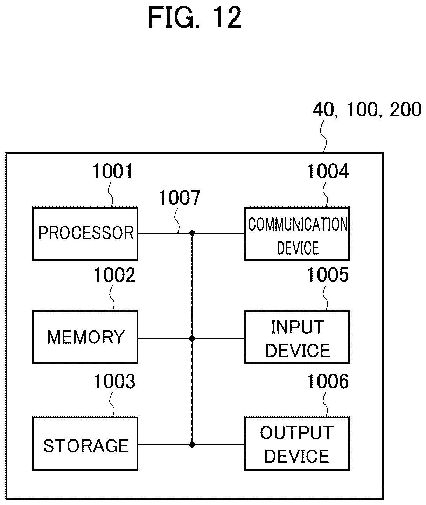

FIG. 2 is a functional block diagram of the network device 40. FIG. 3 is a functional block diagram of the gNB 100. FIG. 4 is a functional block configuration diagram of the UE 200. Note that, only the main functional blocks relating to the description of the embodiment are illustrated in FIGS. 2 to 4, and the gNB 100 and the UE 200 have other functional blocks (for example, a power supply unit). FIGS. 2 to 4 also illustrate the functional block configurations of the network device 40, the gNB 100, and the UE 200, and please refer to FIG. 12 for the hardware configuration.

### (2.1) Network device 40

As illustrated in FIG. 2, the network device 40 includes a network interface (IF) unit 41, a user management unit 43, a position information processing unit 45, and a control unit 47.

A case where the AMF constitutes the network device 40 will be described here; however, other network devices (SMF, UDM/UDR, or the like) may have similar functions.

The network IF unit 41 provides a network interface (IF) necessary for communication with devices in the 5GC and the NG-RAN 20. The network IF may include an interface (for example, N1, N2, N3, N6, N11, and N15) according to the 3GPP specifications.

The user management unit 43 provides access and mobility management functions of the UE 200. Further, in the present embodiment, the user management unit 43 can manage the contract contents of the user (subscriber) of the UE 200. Specifically, the user management unit 43 can acquire information relating to the subscriber of the UE 200 (hereinafter, subscriber information) from the network.

More specifically, the user management unit 43 can acquire subscriber information indicating whether the subscriber has a contract for a terminal (UE) for the transportation mobile communication system (FRMCS). The user management unit 43 may include more specific contract contents relating to the FRMCS. For example, the subscriber information may include a communication type such as a railway emergency communication, the ATP, and the ATO, as described above, or UE access identification information (Access identity) and an UE access category (Access category).

The user management unit 43 can receive, from the network, a message including subscriber information relating to the subscriber of the UE 200 for the FRMCS. In the present embodiment, the user management unit 43 may constitute a receiving unit for receiving a message including subscriber information from the network.

Specifically, in the registration processing of the UE 200 (registration), the user management unit 43 (AMF) may receive, from the UDM, a Nudm_SDM_Get response including subscriber information indicating that the UE is a high-priority UE for the FRMCS (Railway high-priority UE) as data relating to the subscriber of the UE 200 for the FRMCS (Railway subscription Data).

Further, the user management unit 43 may transmit a message including the subscriber information (Railway high-priority UE) to other network devices (RAN nodes) constituting the NG-RAN 20. For example, the user management unit 43 (AMF) may transmit a registration accept including the Railway high-priority UE to the gNB 100.

The position information processing unit 45 performs processing relating to the position information of the UE 200. Specifically, the position information processing unit 45 may perform processing relating to registration and update of the tracking area (TA) for the UE 200. As described above, the TA may be called a RAN based notification area.

The position information processing unit 45 can perform registration and update of the TA based on the cell (or TA) in which the UE 200 is positioned. The position information processing unit 45 may prioritize TA registration and update of the UE 200 over other UEs 200 based on the subscriber information (Railway high-priority UE).

The control unit 47 controls each functional block constituting the network device 40 (AMF). In particular, in the present embodiment, the control unit 47 may prioritize processing relating to the UE 200 in the control plane over other UEs 200 based on the subscriber information (Railway high-priority UE).

Specifically, the control unit 47 may prioritize all or part of the processing relating to the UE 200 which is designated as the Railway high-priority UE by the subscriber information over the UE 200 which is not designated as the Railway high-priority UE. For example, as described above, the control unit 47 may prioritize TA registration and update processing of the UE 200. In addition to the TA registration and update processing, the control unit 47 may prioritize processing relating to access and mobility of the UE 200.

### (2.2) gNB 100

As illustrated in FIG. 3, the gNB 100 includes a radio communication unit 110, a connection processing unit 120, a handover processing unit 130, and a control unit 140.

The radio communication unit 110 transmits a downlink signal (DL signal) according to NR. In addition, the radio communication unit 110 receives an uplink signal (UL signal) according to NR.

The connection processing unit 120 performs processing relating to the connection of the UE 200 with the network. Specifically, the connection processing unit 120 can perform processing relating to the random access procedure (RA procedure) of the UE 200, and processing relating to the connection of the UE 200 in an RRC layer.

The RA procedure may be simply read as a random access channel (RACH). The RA procedure (RACH) may include a 2-step RACH and a 4-step RACH.

Further, the RA procedure (RACH) may include a 2-step RACH and a 4-step RACH. In the 2-step RACH, messages (MSG) A and B (Random Access Preamble and Contention Resolution/Random Access Response) may be transmitted and received. In the 4-step RACH, MSG 1 to 4 (Random Access Preamble, Random Access Response, Scheduled Transmission, and Contention Resolution) may be transmitted and received.

The connection in the RRC layer may include transmission and reception of messages relating to RRC setup (RRC Setup Request and RRC Setup Complete), and transmission and reception of messages relating to RRC resume (RRC Resume Request, RRC Resume, and RRC Resume Complete).

Further, the connection processing unit 120 can receive, from the UE 200, a message including access information relating to access from the UE 200 for the transportation mobile communication system (FRMCS) to the network. In the present embodiment, the connection processing unit 120 may constitute a reception unit for receiving a message including access information. The access to the network from the UE 200 may be interpreted as communication (message transmission and reception, or the like) with the network devices (including the gNB 100) constituting the NG-RAN 20 or 5GC.

Specifically, the connection processing unit 120 may receive a message including the access identification information (Access identity) and/or the Access category of the UE 200.

The access information may include an element indicating that the UE is a high-priority UE for the FRMCS (Railway high-priority UE).

The connection processing unit 120 may transmit, to the high-priority UE, priority information indicating a priority of the random access procedure (RA procedure) with the high-priority UE. In the present embodiment, the connection processing unit 120 may constitute a transmission unit for transmitting the priority information.

Specifically, the connection processing unit 120 may transmit priority information indicating a priority of the RA procedure between a network slice, the Access identity (1 and 2) and the Railway high-priority UE to the UE 200. The network slice may be interpreted as an architecture for dividing and optimizing a core network in service units such as use cases or business models.

The handover processing unit 130 performs processing relating to handover of the UE 200. Specifically, the handover processing unit 130 performs handover from the serving cell of the UE 200 to other neighboring cells.

The serving cell may be simply interpreted as a cell to which the UE 200 is connected, but more specifically, in the case of the RRC_CONNECTED UE in which carrier aggregation (CA) is not configured, only one serving cell constitutes a primary cell. In the case of the RRC_CONNECTED UE configured using CA, the serving cell may be interpreted as representing one or multiple sets of cells including a primary cell and all secondary cells.

The handover may include a conditional handover (CHO) or a DAPS (Dual Active Protocol Stack) handover.

The control unit 140 controls each functional block constituting the gNB 100. In particular, in the present embodiment, the control unit 140 may prioritize processing relating to a specific UE 200 in the control plane over other UEs 200 based on the access information.

Specifically, the control unit 140 may prioritize processing relating to the UE 200 in the control plane over other UEs 200 when indicated that the UE is a high-priority UE for the FRMCS (high-priority UE) by the Access identity or Access category. Note that the priority target processing may include not only processing in the control plane but also processing in the user plane.

Further, the control unit 140 may prioritize processing relating to a signaling radio bearer (SRB) for the high-priority UE over signaling radio bearers for other UEs 200. Specifically, the control unit 140 can prioritize processing relating to the configuration or change of an SRB. The SRB includes the SRB 0 to 3, which may be defined as follows.

- SRB 0: a radio bearer for RRC messages using a CCCH (common control channel) logical channel.
- SRB 1: a radio bearer for RRC messages (which may include piggybacked non-access layer (NAS) messages), and for NAS messages prior to establishment of SRB2 which uses a DCCH (dedicated control channel) logical channel.
- SRB 2: a radio bearer for NAS messages using all DCCH logical channels. SRB2 has a lower priority than SRB1 and is always configured by a network after security is activated.
- SRB 3: a radio bearer for specific RRC messages in which UE is in a Multi-RAT Dual Connectivity (MR-DC) state, which uses DCCH logical channels.

The control unit 140 may restrict access to the network from the UEs 200 (other terminals) other than the high-priority UE, based on the access information (Access identity or Access category). Specifically, the control unit 140 may apply access barring to the UEs 200 other than the high-priority UE when a cell (which may be a serving cell) to which the high-priority UE is standby or connected is crowded (which may be read as congestion).

For example, if the access category is other than "0" (MT access), "2" (emergency), or the railway priority access, the control unit 140 may restrict (reject) access from the UE 200. In addition, if the Access identity is other than mps-PriorityAccess or mcs-PriorityAccess, the control unit 140 may restrict (reject) access from the UE 200. Note that "mps" may mean a multimedia priority service, and "mcs" may mean a mission critical service.

The control unit 140 may prioritize the random access procedure (RA procedure) with the high-priority UE over the UEs 200 other than the high-priority UE, based on the access information (Access identity or Access category). Specifically, the control unit 140 may apply power ramping (powerRampingStepHighPriority) and/or scaling factor (scalingFactorBI) dedicated to the high-priority UE in the RA procedure, and performs the RA procedure with the high-priority UE.

Further, the control unit 140 may prioritize processing relating to handover with the high-priority UE. Specifically, the control unit 140 can transmit a handover request for the high-priority UE to the gNB 100 (target RAN node) that is the handover destination with priority over the UEs 200 other than the high-priority UE.

Alternatively, the control unit 140 may perform an interruption for the handover of the high-priority UE even during the handover of the UE 200 other than the high-priority UE.

### (2.3) UE 200

As illustrated in FIG. 4, the UE 200 includes a radio communication unit 210, a connection processing unit 220, a handover execution unit 230, and a control unit 240. Note that the UE 200 may be a high-priority UE for the FRMCS (high-priority UE).

The radio communication unit 210 transmits an uplink signal (UL signal) according to NR. In addition, the radio communication unit 210 receives an uplink signal (DL signal) according to NR.

The connection processing unit 220 performs processing relating to connection with the NG-RAN 20 and/or 5GC. Specifically, the connection processing unit 220 can perform processing relating to the random access procedure (RA procedure) of the UE 200, and processing relating to connection in the RRC layer.

In the present embodiment, when the UE 200 is a high-priority UE, the connection processing unit 220 may configure that the connection processing is communication for the transportation mobile communication system (FRMCS) (Railway high-priority UE), as the reason included in the message of the radio resource control layer (RRC), specifically, as the establishment cause or the resume cause.

The connection processing unit 220 can transmit, to the gNB 100, a request message of the RRC layer, specifically, a request message (RRC Setup Request, RRC Resume Request) including a reason indication indicating that communication for the FRMCS is the reason for transmission of the RRC Setup Request and the RRC Resume Request. In the present embodiment, the connection processing unit 220 may constitute a transmission unit for transmitting a request message including a reason indication.

In addition, when updating the area (TA) relating to the position of the UE 200 (terminal) (tracking area update), the connection processing unit 220 may transmit to the gNB 100, a request message including the reason indication, specifically, the RACH Setup Request. In this case, the reason indication may be any one of highPriorityAccess, mps-PriorityAccess, mcs-PriorityAccess, and railway priority access. The highPriorityAccess means the priority access having an Access Identity = 11 to 15.

When the serving cell of the UE 200 (high-priority UE) is crowded, the connection processing unit 220 may transmit the request message (for example, RRC Setup Request) including the reason indication (for example, railway priority access).

In addition, the connection processing unit 220 may transmit a random access channel using resources for the random access channel (RACH) secured for the FRMCS. The RACH resources secured for the FRMCS may be some common RACH resources such as a RACH preamble.

The handover execution unit 230 performs handover of the UE 200. Specifically, the handover execution unit 230 performs quality measurement of the serving cell of the UE 200 and neighboring cells, and performs handover from the serving cell of the UE 200 to other neighboring cells based on an instruction from the gNB 100.

In the present embodiment, if the UE 200 is a high-priority UE, the handover execution unit 230 can perform handover with priority over the other UEs 200 based on an instruction from the gNB 100.

The control unit 240 controls each functional block constituting the UE 200. In particular, in the present embodiment, the control unit 240 can control the transmission and reception of various messages performed by the UE 200.

Specifically, the control unit 240 can control the transmission of a request message of a random access channel or an RRC layer. In addition, the control unit 240 can control the transmission of a random access channel (RACH). As described above, the request message may include a RACH Setup Request, an RRC Setup Request, an RRC Resume Request, and the like.

### (3) Operation of radio communication system

Next, an operation of the radio communication system 10 will be described. Specifically, an operation relating to signaling of communication for the transportation mobile communication system (FRMCS) in the control plane will be described.

### (3.1) Assumption and problem

When communication for the FRMCS is supported by the radio communication system 10 (PLMN), for example, the following problems are assumed. When the vehicle 50 while traveling (see FIG. 1) enters a region where handover (HO) of the UE 200 is required or a region where a tracking area update (TAU) is required, in the UE 200 (general UE 200 and UE 200 for the FRMCS can be mixed) on the vehicle 50, signaling for HO/TAU may occur at the same time.

This may cause many signaling (signaling storm) at the same time, whichr may cause the FRMCS signals (for example, a railway emergency communication, the automatic train protection system (ATP), and the automatic train operation (ATO) system) to go down.

In the following operation example, a description will be given regarding an operation example relating to signaling which can solve the problem, particularly, to signaling in the control plane.

### (3.2) Operation example 1

In the present operation example, when the multiple UEs perform handover, signaling in the control plane relating to the handover of the UE for the FRMCS with high priority (high-priority UE) is controlled with priority.

Regarding the scheduling of a data radio bearer (DRB), priority control is achieved by configuring a high logical channel priority (LCP) with respect to the DRB with a high QoS class identifier (QCI) and configuring a heavy scheduling coefficient. In the present operation example, the priority control between signaling radio bearers (SRB) may be achieved.

Specifically, the high-priority UE (Railway high-priority UE) may be identified by the contract information (subscriber information) of the UE 200. For example, the Railway high-priority UE may be defined as the subscription information.

In the registration procedure of the UE 200 to the network, the network device 40 (UDM/UDR) may transmit a message including the information element (Railway high-priority UE) to the other network device 40 (for example, AMF).

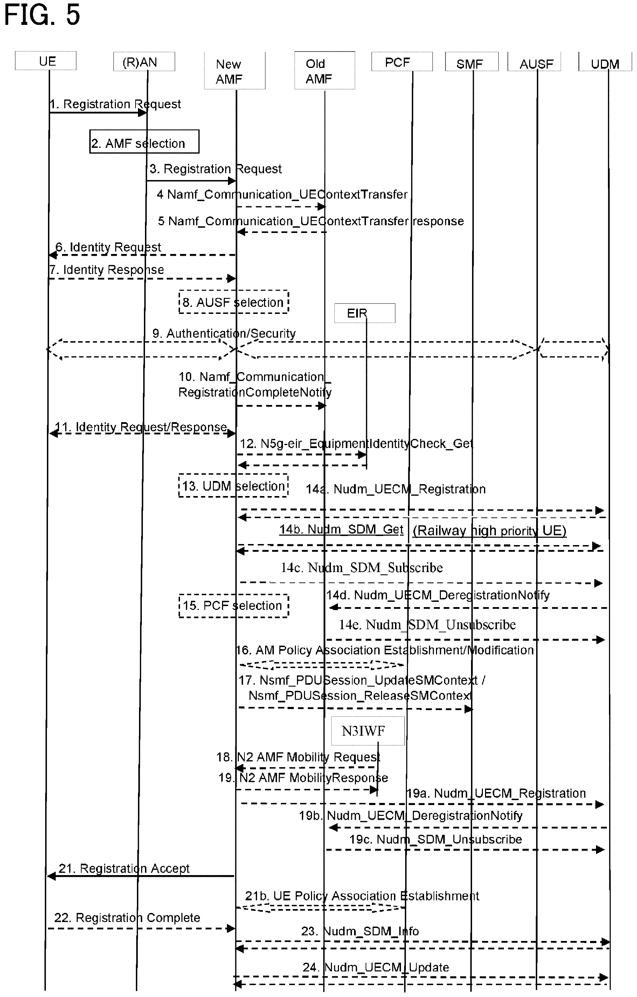

FIG. 5 illustrates a sequence example of the registration procedure according to operation example 1. The sequence of the registration procedure illustrated in FIG. 5 is specified in 3GPP TS23.502, chapter 4.2.2.2.2.

As illustrated in FIG. 5, the contract information of the UE 200 (Railway high-priority UE) may be transmitted from the UDM/UDR to the AMF in the Nudm_SDM_Get response (step 14b).

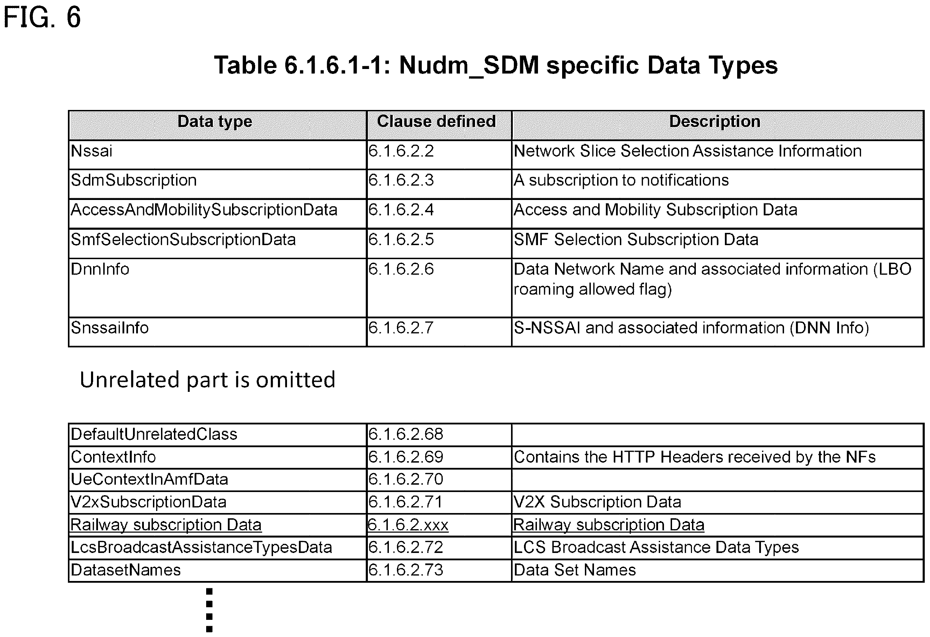

FIG. 6 illustrates an example of Nudm_SDM specific Data Types. As illustrated in FIG. 6, the Railway subscription Data (tentative name) may be included as one type of Nudm_SDM specific Data Types (see 3GPP TS 29.503). The Railway subscription Data may be used to indicate the Railway high-priority UE described above.

Further, the AMF may transmit a message including the Railway high-priority UE to the RAN node, specifically, to the gNB 100.

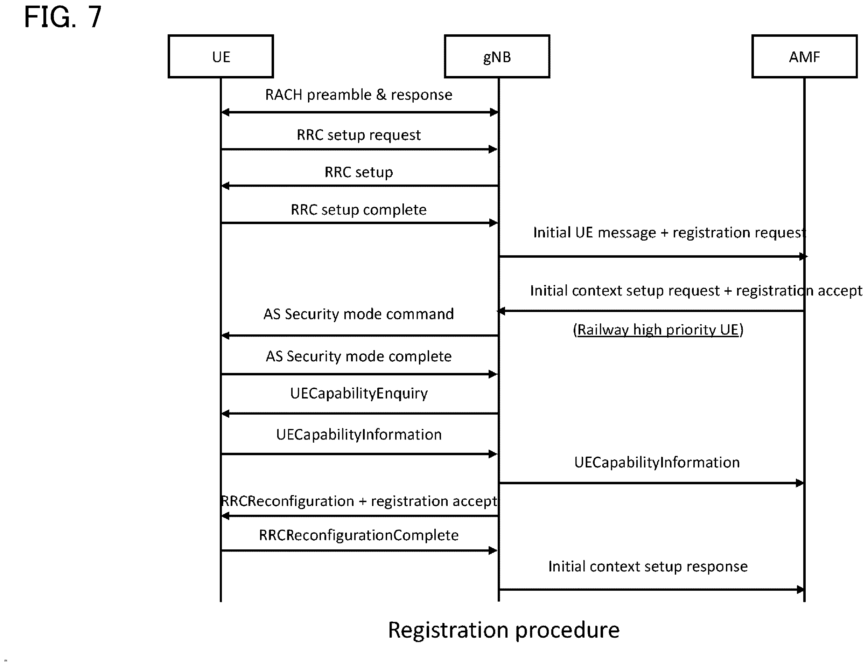

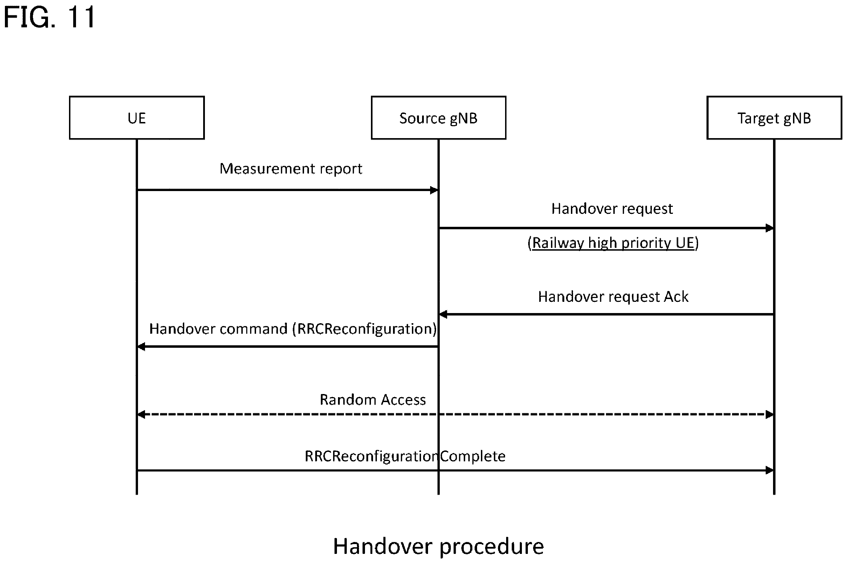

FIG. 7 illustrates a sequence example of the registration procedure (RA procedure) according to the operation example 1. As illustrated in FIG. 7, the AMF may transmit a registration accept including the Railway high-priority UE to the gNB 100. In addition, the gNB 100 (source RAN node) may transmit a message including the Railway high-priority UE to the gNB 100 (target RAN node) that is the handover destination at the time of handover of the UE 200 (high-priority UE) (see FIG. 11 to be described later).

Alternatively, the network device 40 (which may include gNB 100; hereinafter, the same shall be applied) may identify whether the UE is a high-priority UE based on the Access identity and/or Access category of the UE 200. Specifically, the Access identity with "1" or "2" (mps or mcs), or unique identification information may be assigned to the high-priority UE. Alternatively, the Access category or Access identity for the high-priority UE (railway priority access) may be assigned.

The network device 40 may identify the high-priority UE based on the establishment cause included in the RRC Setup Request or the resume cause included in the RRC Resume Request. In this case, the establishment cause and the resume cause for the high-priority UE may be configured to any of mps-PriorityAccess, mcs-PriorityAccess, and railway priority access.

The network device 40 may identify the high-priority UE based on the network slice identification information (slice ID) transmitted from the AMF or the source RAN node. For example, the network device 40 may identify the high-priority UE based on S-NSSAI (Single-Network Slice Selection Assistance Information) included in a PDU SESSION RESOURCE SETUP REQUEST.

In addition, the network device 40 may prioritize the scheduling of SRBs 1 and 3 with the high-priority UE over the scheduling of SRBs 1 and 3 with the UEs other than the high-priority UE. In the SRBs 1 and 3, the messages relating to the measurement report and the reconfiguration of the RRC layer are transmitted and received. Further, in the SRBs 1 and 3, the following messages may be transmitted and received.

- DL: Network to UE
   - RRCReestablishment
   - RRCRelease
   - RRCResume
   - RRCSetup
   - SecurityModeCommand
   - UECapabilityEnquiry
   - UEInformationRequest
   - CounterCheck
- UL: UE to Network
   - RRCReestablishmentComplete
   - RRCReconfigurationComplete
   - RRCResumeComplete
   - RRCSetupComplete
   - SCGFailureInformation
   - SCGFailureInformationEUTRA
   - FailureInformation
   - SecurityModeComplete
   - SecurityModeFailure
   - UEAssistanceInformation
   - UECapabilityInformation
   - UEInformationResponse
   - CounterCheckResponse

Specifically, the priority of the SRBs 1 and 3 in the logical channel configuration with the high-priority UE may be configured higher than that of the UEs other than the high-priority UE. Alternatively, the scheduler in the NG-RAN 20 may configure the heavy scheduling weight (which may be read as a coefficient) with respect to the SRBs 1 and 3 with the higher priority, thereby achieving the priority control.

For example, regarding the high-priority UE, in the case of NR, the RLC-BearConfig>logical channel config>priority included in the information element cellGroupConfig may be configured higher than that of other UEs. In addition, regarding the high-priority UE, in the case of LTE, the SRBtoAddMod>logical channel config>priority included in the information element RadioResourceConfigDedicated may be configured higher than that of other UEs.

Further, the information element (IE) of the Railway high-priority UE described above may be included in the following message on the NG-AP (application) interface.

- Initial context setup request
- UE context modification request
- Handover request (AMF/MME→gNB/eNB)
- Path switch request acknowledge

Further, the information element (IE) of the Railway high-priority UE described above may be included in the following message on the Xn-AP (application) interface.

- Handover request (source gNB/eNB→target gNB/eNB)
- Retrieve UE context response (old gNB/eNB→new gNB/eNB)

### (3.3) Operation example 2

In the present operation example, signaling relating to the high-priority UE (Railway high-priority UE) is controlled with priority during Tracking Area Update (TAU), RAN based notification area update (RNAU), and cell congestion.

In order to realize such signaling priority control, the UE 200 (high-priority UE) may configure an establishment cause of the RRC Setup Request to any of the following.

- highPriorityAccess
- mps-PriorityAccess
- mcs-PriorityAccess
- railway priority access (tentative name)

The high-priority UE may transmit an RRC Setup Request including the establishment cause during TAU or cell congestion.

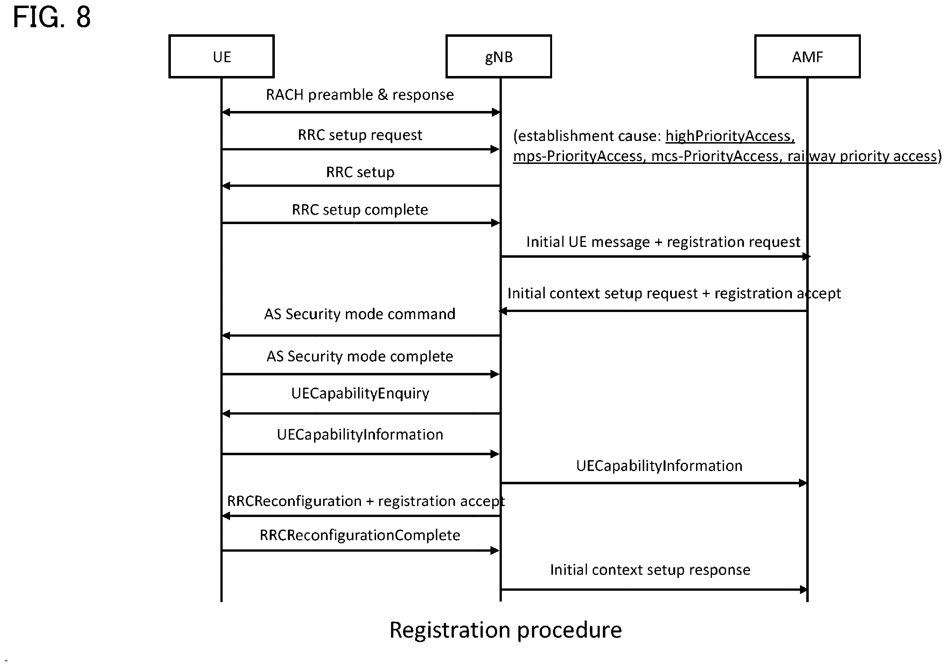

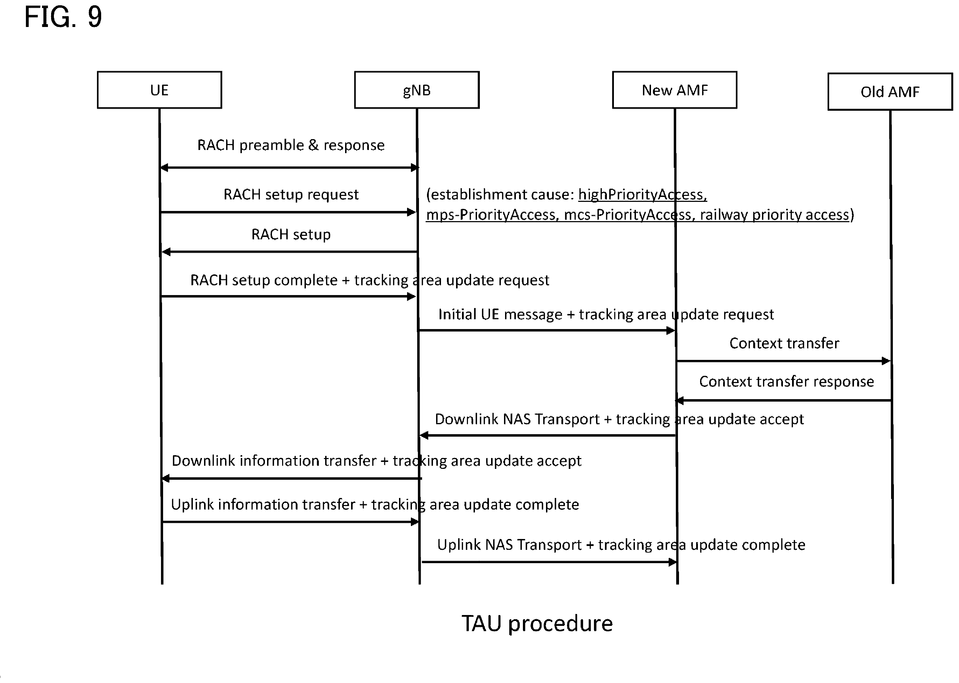

FIG. 8 illustrates a sequence example of the registration procedure (RA procedure) according to operation example 2. FIG. 9 illustrates a sequence example of the TAU procedure according to the operation example 2.

As illustrated in FIGS. 8 and 9, the UE 200 (high-priority UE) may transmit an RRC Setup Request including any of the establishment causes described above to the gNB 100. The gNB 100 (and the network device 40) may preferentially transmit an RRC setup message to the high-priority UE based on the establishment cause. The gNB 100 (and the network device 40) may then preferentially perform configuration or change of the RRC layer of the high-priority UE.

Further, the UE 200 (high-priority UE) may configure a resume cause of the RRC Resume Request to any of the following:
- highPriorityAccess
- mps-PriorityAccess
- mcs-PriorityAccess
- railway priority access (tentative name)

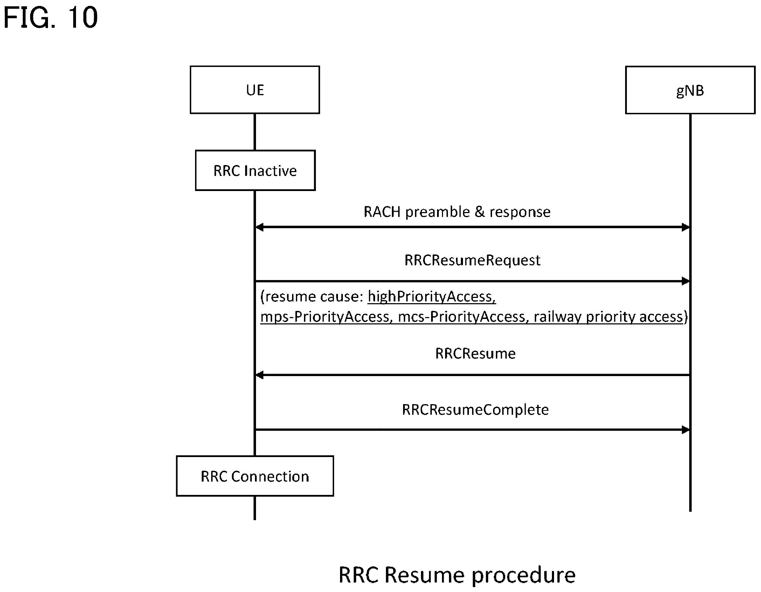

FIG. 10 illustrates a sequence example of the RRC resume procedure according to the operation example 2. As illustrated in FIG. 10, the UE 200 (high-priority UE) may transmit the RRC Resume Request including any of the above resume causes to the gNB 100. The gNB 100 (and the network device 40) may preferentially perform the restoration processing of the RRC layer of the high-priority UE based on the resume cause.

When a cell (serving cell of high-priority UE) is crowed, the network device 40 may impose restriction (barring) on a specific UE 200. Specifically, when the access category is other than "0" (MT access), "2" (emergency), or a railway priority access (which may be referred to as a railway high priority access), the network device 40 may restrict (reject) access (access attempt) from the UE 200.

In addition, some common RACH resources (for example, RACH preamble) may be secured for the high-priority UE.

Alternatively, the RACH may be prioritized (RACH prioritization) for the high-priority UE. Specifically, powerRampingStepHighPriority and/or scalingFactorBI dedicated to the high-priority UE may be applied in the RA procedure.

In addition, the gNB 100 may indicate to the UE 200, the priority of RACH prioritization between network slice (Slicing), Access identity 1 or 2 (mps or mcs), and the high-priority UE (Railway high-priority UE). The priority may be notified to the UE 200 by a message in the RA procedure, or notified to the UE 200 using SIB1. In the RACH prioritization, for example, the Access identity 1 and Access identity 2 may be high, and the Railway high-priority UE may be low and Slicing may be lowest. Further, the priority of the 3GPP Release-17 feature RedCap (Reduced Capability), Coverage enhancement, and Small Data Transmission (SDT) with the RACH may be indicated by the SIB1.

### (3.4) Operation example 3

In the present operation example, when the handover (HO) processing of the multiple UEs is performed simultaneously, signaling relating to the high-priority UE (Railway high-priority UE) is controlled with priority.

FIG. 11 illustrates a sequence example of a handover procedure according to operation example 3. As illustrated in FIG. 11, in the case of the HO of the high-priority UE, the gNB 100 (source RAN node) may transmit a handover request to the gNB 100 (target RAN node) that is the handover destination with priority over the other UEs 200.

Alternatively, the gNB 100 may perform an interruption for the handover of the high-priority UE even during the handover of the UE 200 other than the high-priority UE. Specifically, the HO procedure of the UE 200 other than the high-priority UE or of the low-priority UE may be canceled (by transmitting a handover cancel command from source RAN node to target RAN node), and the HO procedure may be preferentially performed for the high-priority UE.

Further, in the RAN node, the resources dedicated to the high-priority UE (for example, dedicated RACH preamble) may be secured. The target RAN node may use the secured resources dedicated to the high-priority UE based on the information element (IE) of the Railway high-priority UE included in the handover request.

### (4) Operation and effect

According to the embodiment described above, the following operation and effect can be obtained. Specifically, the radio communication system 10 described above makes it possible to support communication for the FRMCS by utilizing the PLMN, and in particular, to control signaling of the high-priority UE (Railway high-priority UE) reliably with priority over the other UEs in the control plane.

Therefore, even when the vehicle 50 while traveling enters a region where the handover (HO) of the UE 200 is required or a region where a TAU is required, and many signaling events in the control plane occur simultaneously, it is possible to avoid a situation in advance where the FRMCS signals (for example, a railway emergency communication, the automatic train protection system (ATP), the automatic train operation (ATO) system) goes down. This makes it possible to contribute to the safe operation of transportation such as railways.

### (5) Other Embodiments

Although the embodiment has been described as above, the embodiment is not limited to the above description, and it is obvious to those skilled in the art that various modifications and improvements are possible.

For example, in the embodiment described above, the FRMCS has been described as an example; however, the transportation mobile communication system is not limited to railways such as the FRMCS as described above. In addition, the transportation mobile communication system may include not only a land transportation, but also a water or marine transportation.

In the above disclosure, terms such as configure, activate, update, indicate, enable, specify, and select may be read interchangeably. Similarly, terms such as link, associate, correspond, and map may be read interchangeably, and terms such as allocate, assign, monitor, and map may be read interchangeably.

In addition, terms such as specific, dedicated, UE-specific, and UE-dedicated may be read interchangeably. Similarly, terms such as common, shared, group-common, UE-common, and UE-shared may be read interchangeably.

The block diagram (FIGS. 2 to 4) used in the description of the above-described embodiment illustrates blocks in units of functions. Those functional blocks (components) can be realized by any combination of at least one of hardware and software. A realization method for each functional block is not particularly limited. That is, each functional block may be realized by using one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that makes a transmitting function work may be called a transmitting unit or a transmitter. For any of the above, as described above, the realization method is not particularly limited.

Further, the above-described network device 40, gNB 100 and UE 200 (the device) may function as a computer that performs processing of a radio communication method of the present disclosure. FIG. 12 is a diagram illustrating an example of a hardware configuration of the device. As illustrated in FIG. 12, the device may be configured as a computer device including a processor 1001, a memory 1002, a storage 1003, a communication device 1004, an input device 1005, an output device 1006, a bus 1007, and the like.

Furthermore, in the following description, the term "device" can be read as meaning circuit, device, unit, or the like. The hardware configuration of the device may include one or more devices illustrated in the figure or may not include some of the devices.

Each of the functional blocks of the devices (FIGS . 2 to 4) is implemented by means of any of hardware elements of the computer device or a combination of the hardware elements.

Each function in the device is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 operates, for example, an operating system to control the entire computer. The processor 1001 may be configured with a central processing unit (CPU) including interfaces with peripheral devices, control devices, arithmetic devices, registers, and the like.

Moreover, the processor 1001 reads a program (program code), a software module, data, and the like from at least one of the storage 1003 and the communication device 1004 into the memory 1002, and executes various processes according to these. As the program, a program causing the computer to execute at least part of the operation described in the above embodiment is used. Alternatively, various processes described above may be executed by one processor 1001 or may be executed simultaneously or sequentially by two or more processors 1001. The processor 1001 may be implemented by using one or more chips. Alternatively, the program may be transmitted from a network via a telecommunication line.

The memory 1002 is a computer readable recording medium and may be configured, for example, with at least one of a Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), and the like. The memory 1002 may store therein programs (program codes), software modules, and the like that can execute the method according to one embodiment of the present disclosure.

The storage 1003 is a computer readable recording medium. Examples of the storage 1003 include at least one of an optical disk such as Compact Disc ROM (CD-ROM), a hard disk drive, a flexible disk, a magneto-optical disk (for example, a compact disk, a digital versatile disk, Blu-ray (registered trademark) disk), a smart card, a flash memory (for example, a card, a stick, a key drive), a floppy (registered trademark) disk, a magnetic strip, and the like. The storage 1003 may be referred to as an auxiliary storage device. The recording medium may be, for example, a database including at least one of the memory 1002 and the storage 1003, a server, or other appropriate medium.

The communication device 1004 is hardware (transmission/reception device) capable of performing communication between computers via at least one of a wired network and a wireless network. The communication device 1004 is also referred to as, for example, a network device, a network controller, a network card, a communication module, and the like.

The communication device 1004 may include a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may have an integrated configuration (for example, a touch screen).

Also, the respective devices such as the processor 1001 and the memory 1002 are connected to each other with the bus 1007 for communicating information. The bus 1007 may be constituted by a single bus or may be constituted by different buses for each device-to-device.

Further, the device may be configured to include hardware such as a microprocessor, a Digital Signal Processor (DSP), an Application Specific Integrated Circuit (ASIC), a Programmable Logic Device (PLD), and a Field Programmable Gate Array (FPGA). Some or all of these functional blocks may be realized by means of this hardware. For example, the processor 1001 may be implemented by using at least one of the above-described items of hardware.

Further, notification of information is not limited to that in the aspect/embodiment described in the present disclosure, and may be performed by using other methods. For example, notification of information may be performed by physical layer signaling (for example, Downlink Control Information (DCI), Uplink Control Information (UCI), higher layer signaling (for example, RRC signaling, Medium Access Control (MAC) signaling), broadcast information (Master Information Block (MIB), System Information Block (SIB)), other signals, or a combination thereof. The RRC signaling may also be referred to as an RRC message, for example, or may be an RRC Connection Setup message, an RRC Connection Reconfiguration message, or the like.

Each aspect/embodiment described in the present disclosure may be applied to at least one of Long Term Evolution (LTE), LTE-Advanced (LTE-A), SUPER 3G, IMT-Advanced, the 4th generation mobile communication system (4G), the 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a system using any other appropriate system, and a next-generation system that is expanded based on these. Further, a plurality of systems may be combined (for example, a combination of at least one of LTE and LTE-A with 5G) and applied.

The order of the processing procedures, sequences, flowcharts, and the like of each aspect/embodiment described in the present disclosure may be exchanged as long as there is no contradiction. For example, the methods described in the present disclosure present the elements of the various steps by using an exemplary order and are not limited to the presented specific order.

The specific operation that is performed by a base station in the present disclosure may be performed by its upper node in some cases. In a network constituted by one or more network nodes having a base station, it is obvious that the various operations performed for communication with the terminal may be performed by at least one of the base station and other network nodes other than the base station (for example, an MME, an S-GW, and the like may be considered, but there is not limited thereto). In the above, an example in which there is one network node other than the base station is explained; however, a combination of a plurality of other network nodes (for example, an MME and an S-GW) may be used.

Information and signals (information and the like) can be output from a higher layer (or lower layer) to a lower layer (or higher layer). These may be input and output via a plurality of network nodes.

The input/output information may be stored in a specific location (for example, a memory) or may be managed in a management table. The information to be input/output can be overwritten, updated, or added. The information may be deleted after outputting. The inputted information may be transmitted to another device.

The determination may be made by using a value (0 or 1) represented by one bit, by truth-value (Boolean: true or false), or by comparison of numerical values (for example, comparison with a predetermined value).

Each of the aspects/embodiment described in the present disclosure may be used separately or in combination, or may be switched in accordance with the execution. In addition, notification of predetermined information (for example, notification of "is X") is not limited to being performed explicitly, and it may be performed implicitly (for example, without notifying the predetermined information).

Regardless of being referred to as software, firmware, middleware, microcode, hardware description language, or some other name, software should be interpreted broadly to mean instructions, an instruction set, code, a code segment, program code, a program, a subprogram, a software module, an application, a software application, a software package, a routine, a subroutine, an object, an executable file, an execution thread, a procedure, a function, and the like.

Further, software, instruction, information, and the like may be transmitted and received via a transmission medium. For example, when software is transmitted from a website, a server, or another remote source by using at least one of a wired technology (a coaxial cable, an optical fiber cable, a twisted pair cable, a Digital Subscriber Line (DSL), or the like) and a wireless technology (infrared light, microwave, or the like), then at least one of these wired and wireless technologies is included within the definition of the transmission medium.

Information, signals, or the like described in the present disclosure may be represented by using any of a variety of different technologies. For example, data, an instruction, a command, information, a signal, a bit, a symbol, a chip, or the like that may be mentioned throughout the above description may be represented by a voltage, a current, an electromagnetic wave, a magnetic field or magnetic particles, an optical field or photons, or any combination thereof.

It should be noted that the terms described in the present disclosure and terms necessary for understanding the present disclosure may be replaced with terms having the same or similar meanings. For example, at least one of a channel and a symbol may be a signal (signaling). A signal may also be a message. Further, a Component Carrier (CC) may be referred to as a carrier frequency, a cell, a frequency carrier, or the like.

The terms "system" and "network" used in the present disclosure can be used interchangeably.

Furthermore, information, parameters, and the like described in the present disclosure may be represented by an absolute value, may be represented by a relative value from a predetermined value, or may be represented by corresponding other information. For example, a radio resource may be indicated using an index.

Names used for the above parameters are not restrictive names in any respect. In addition, formulas and the like using these parameters may be different from those explicitly disclosed in the present disclosure. Since the various channels (for example, a PUCCH, a PDCCH, or the like) and information elements can be identified by any suitable names, the various names allocated to these various channels and information elements shall not be restricted in any way.

In the present disclosure, the terms such as "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. A base station may also be referred to with a term such as a macro cell, a small cell, a femtocell, or a pico cell.

A base station can accommodate one or more (for example, three) cells (also referred to as sectors). In a configuration in which a base station accommodates a plurality of cells, the entire coverage area of the base station can be divided into a plurality of smaller areas. In each of the smaller areas, a communication service can be provided by a base station subsystem (for example, a small base station for indoor use (remote radio head: RRH)).

The term "cell" or "sector" refers to a part or all of the coverage area of at least one of a base station and a base station subsystem that performs a communication service in this coverage.

In the present disclosure, the terms such as "mobile station (Mobile Station: MS)", "user terminal", "user equipment (User Equipment: UE)", and "terminal" can be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms by those skilled in the art.

At least one of a base station and a mobile station may be called a transmitting device, a receiving device, a communication device, or the like. Note that at least one of a base station and a mobile station may be a device mounted on a moving body, a moving body itself, or the like. The moving body may be a vehicle (for example, a car, an airplane, or the like), an unmanned moving body (a drone, a self-driving car, or the like), or a robot (manned type or unmanned type). At least one of a base station and a mobile station also includes a device that does not necessarily move during the communication operation. For example, at least one of a base station and a mobile station may be an Internet of Things (IoT) device such as a sensor.

Also, a base station in the present disclosure may be read as meaning a mobile station (user terminal, hereinafter, the same). For example, each aspect/embodiment of the present disclosure may be applied to a configuration in which communication between a base station and a mobile station is replaced with communication between a plurality of mobile stations (which may be called Device-to-Device (D2D), Vehicle-to-Everything (V2X), or the like). In this case, the mobile station may have the function of a base station. In addition, words such as "uplink" and "downlink" may also be read as meaning words corresponding to inter-terminal communication (for example, "side"). For example, an uplink channel, a downlink channel, or the like may be read as meaning a side channel.

Similarly, the mobile station in the present disclosure may be read as meaning a base station. In this case, the base station may have the function of the mobile station. A radio frame may be composed of one or more frames in the time domain. Each of the one or more frames in the time domain may be referred to as a subframe.

A subframe may be further composed of one or more slots in the time domain. The subframe may be a fixed time length (for example, 1 ms) independent of the numerology.

The numerology may be a communication parameter applied to at least one of transmission and reception of a certain signal or channel. The numerology may indicate at least one of, for example, subcarrier spacing (SCS), bandwidth, symbol length, cyclic prefix length, transmission time interval (TTI), the number of symbols per TTI, radio frame configuration, a specific filtering process performed by a transceiver in the frequency domain, a specific windowing process performed by a transceiver in the time domain, and the like.

A slot may be composed of one or more symbols (Orthogonal Frequency Division Multiplexing (OFDM)) symbols, Single Carrier Frequency Division Multiple Access (SC-FDMA) symbols, and the like) in the time domain. A slot may be a unit of time based on the numerology.

A slot may include a plurality of minislots. Each minislot may be composed of one or more symbols in the time domain. A minislot may be called a subslot. A minislot may be composed of fewer symbols than slots. A PDSCH (or PUSCH) transmitted in time units greater than the minislot may be referred to as a PDSCH (or PUSCH) mapping type A. A PDSCH (or PUSCH) transmitted using a minislot may be referred to as a PDSCH (or PUSCH) mapping type B.

Each of a radio frame, subframe, slot, minislot, and symbol represents a time unit for transmitting a signal. A radio frame, subframe, slot, minislot, and symbol may have respectively different names corresponding to them.

For example, one subframe may be called a transmission time interval (TTI), a plurality of consecutive subframes may be called a TTI, and one slot or one minislot may be called a TTI. That is, at least one of the subframe and TTI may be a subframe (1 ms) in the existing LTE, a period shorter than 1 ms (for example, 1 to 13 symbols), or a period longer than 1 ms. Note that, a unit representing TTI may be called a slot, a minislot, or the like instead of a subframe.

Here, a TTI refers to the minimum time unit of scheduling in radio communication, for example. For example, in the LTE system, the base station performs scheduling for allocating radio resources (frequency bandwidth, transmission power, and the like that can be used in each user terminal) to each user terminal in units of TTI. The definition of TTI is not limited to this.

A TTI may be a transmission time unit such as a channel-coded data packet (transport block), a code block, or a code word, or may be a processing unit such as scheduling or link adaptation. When a TTI is given, a time interval (for example, the number of symbols) in which a transport block, a code block, a code word, and the like are actually mapped may be shorter than TTI.

When one slot or one minislot is called a TTI, one or more TTIs (that is, one or more slots or one or more minislots) may be the minimum time unit of the scheduling. The number of slots (minislot number) constituting the minimum time unit of the scheduling may be controlled.

A TTI having a time length of 1 ms may be referred to as an ordinary TTI (TTI in LTE Rel. 8-12), a normal TTI, a long TTI, an ordinary subframe, a normal subframe, a long subframe, a slot, and the like. A TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, and the like) may be read as meaning a TTI having a time length exceeding 1 ms, and a short TTI (for example, shortened TTI) may be read as meaning a TTI having a TTI length of less than a TTI length of a long TTI and a TTI length of 1 ms or more.

A resource block (RB) is a resource allocation unit in the time domain and the frequency domain, and may include one or more consecutive subcarriers in the frequency domain. The number of subcarriers included in the RB may be the same regardless of the numerology, and may be 12, for example. The number of subcarriers included in the RB may be determined based on the numerology.

Further, the time domain of an RB may include one or more symbols, and may have a length of 1 slot, 1 minislot, 1 subframe, or 1 TTI. Each TTI, subframe, or the like may be composed of one or more resource blocks.

Note that, one or more RBs may be called a physical resource block (PRB), a subcarrier group (SCG), a resource element group (REG), a PRB pair, a RB pair, and the like.

A resource block may be configured by one or more resource elements (REs). For example, one RE may be a radio resource domain of one subcarrier and one symbol.

A bandwidth part (BWP) (which may be called a partial bandwidth or the like) may represent a subset of consecutive common resource blocks (RBs) for a certain numerology in a certain carrier. Here, the common RB may be specified by an index of the RB based on the common reference point of the carrier. A PRB may be defined in a certain BWP and numbered within that BWP.

A BWP may include a BWP for UL (UL BWP) and a BWP for DL (DL BWP) . One or more BWPs may be configured in one carrier for the UE.

At least one of the configured BWPs may be active, and the UE does not have to expect to transmit and receive predetermined signals/channels outside the active BWP. Note that "cell", "carrier", and the like in this disclosure may be read as meaning "BWP".

The above-described structures such as a radio frame, a subframe, a slot, a minislot, and a symbol are merely examples. For example, structures such as the number of subframes included in a radio frame, the number of slots per subframe or radio frame, the number of minislots included in a slot, the number of symbols and RBs included in a slot or minislot, the number of subcarriers included in RBs, and the number of symbols included in a TTI, a symbol length, the cyclic prefix (CP) length, and the like can be changed in various manner.

The terms "connected", "coupled", or any variations thereof mean any direct or indirect connection or coupling between two or more elements, and can include that one or more intermediate elements are present between two elements that are "connected" or "coupled" to each other. The coupling or connection between the elements may be physical, logical, or a combination thereof. For example, "connection" may be read as meaning "access". In the present disclosure, two elements can be "connected" or "coupled" to each other by using at least one of one or more wires, one or more cables, and one or more printed electrical connections, and as some non-limiting and non-exhaustive examples, by using electromagnetic energy having wavelengths in the radio frequency domain, a microwave region, and a light (both visible and invisible) region, and the like.

A reference signal may be abbreviated as RS and may be called a pilot according to applicable standards.

As used in the present disclosure, the phrase "based on" does not mean "based only on" unless explicitly stated otherwise. In other words, the phrase "based on" means both "based only on" and "based at least on".

"Means" in the configuration of each device above may be replaced with "unit", "circuit", "device", and the like.

Any reference to elements using a designation such as "first", "second", or the like used in the present disclosure generally does not limit the amount or order of those elements. Such designations can be used in the present disclosure as a convenient method to distinguish between two or more elements. Thus, the reference to the first and second elements does not imply that only two elements can be adopted, or that the first element has to precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive-OR.

Throughout the present disclosure, for example, during translation, if articles such as a, an, and the in English are added, the present disclosure may include that a noun following these articles is used in plural.

As used in this disclosure, the term "determining" may encompass a wide variety of actions. "determining" includes deeming that determining has been performed by, for example, judging, calculating, computing, processing, deriving, investigating, searching (looking up, search, inquiry) (for example, searching in a table, database, or another data structure), ascertaining, and the like. In addition, "determining" can include deeming that determining has been performed by receiving (for example, receiving information), transmitting (for example, transmitting information), inputting (input), outputting (output), access (accessing) (for example, accessing data in a memory), and the like. In addition, "determining" can include deeming that determining has been performed by resolving, selecting, choosing, establishing, comparing, and the like. That is, "determining" may include deeming that "determining" regarding some action has been performed. Moreover, "determining" may be read as meaning "assuming", "expecting", "considering", and the like.

In the present disclosure, the wording "A and B are different" may mean "A and B are different from each other". It should be noted that the wording may mean "A and B are each different from C". Terms such as "separate", "couple", or the like may also be interpreted in the same manner as "different".

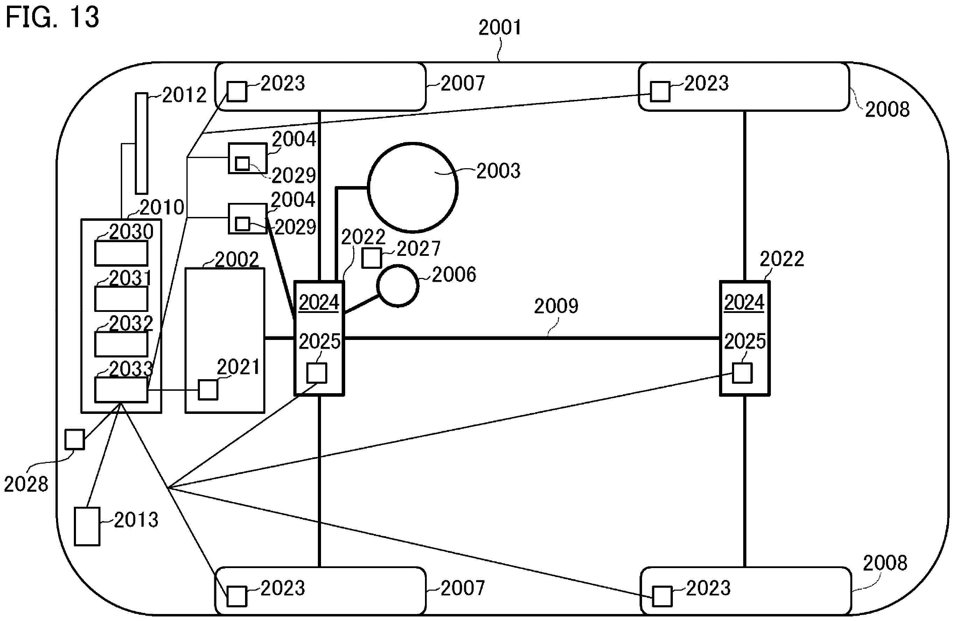

FIG. 13 shows a configuration example of a vehicle 2001. As shown in FIG. 13, the vehicle 2001 includes a drive 2002, a steering 2003, an accelerator pedal 2004, a brake pedal 2005, a shift lever 2006, left and right front wheels 2007, left and right rear wheels 2008, an axle 2009, an electronic controller 2010, various sensors 2021 to 2029, an information service unit 2012, and a communication module 2013.

Examples of the drive 2002 include, an engine, a motor, and a hybrid of an engine and a motor. The steering 2003 includes at least a steering wheel (also called a handle) and steers at least one of the front and rear wheels based on an operation of a steering wheel operated by a user. The electronic controller 2010 includes a microprocessor 2031, a memory (ROM, RAM) 2032, and a communication port (IO port) 2033. The electronic controller 2010 receives signals from various sensors 2021 to 2027 provided in the vehicle. The electronic controller 2010 may be called an ECU (Electronic Control Unit).

The signals from the various sensors 2021 to 2028 include a current signal from a current sensor 2021 for sensing current of a motor, a rotation speed signal of a front wheel and a rear wheel acquired by the speed sensor 2022, a pressure signal of a front wheel and a rear wheel acquired by an air pressure sensor 2023, a speed signal of a vehicle acquired by a speed sensor 2024, an acceleration signal acquired by an acceleration sensor 2025, an accelerator pedal pressed-amount signal acquired by an accelerator pedal sensor 2029, a brake pedal pressed-amount signal acquired by a brake pedal sensor 2026, an operation signal of the shift lever acquired by a shift lever sensor 2027, and a detection signal acquired by an object detection sensor 2028 for detecting obstacles, vehicles, pedestrians, and the like.

The information service unit 2012 includes various devices such as a car navigation system, an audio system, a speaker, a television, and a radio for providing various information such as driving information, traffic information, and entertainment information, and one or more ECUs for controlling these devices. The information service unit 2012 provides various multimedia information and multimedia services to an occupant of the vehicle 1 by using information acquired from an external device through a communication module 2013 and the like.

A driver support system unit 2030 comprises various devices such as a millimeter wave radar, a light detection and ranging (LiDAR), a camera, a positioning locator (for example, GNSS), map information (for example, high-definition (HD) maps, autonomous vehicle (AV) maps, and the like), a gyroscopic system (for example, an inertial measurement unit (IMU), an inertial navigation system (INS), and the like), an artificial intelligence (AI) chip, and an AI processor for providing functions to prevent accidents or reduce a driving load of a driver, and one or more ECUs for controlling these devices. Further, the driver support system unit 2030 transmits and receives various kinds of information through the communication module 2013 to realize a driver support function or an automatic driving function.

The communication module 2013 can communicate with the microprocessor 2031 and components of the vehicle 1 through a communication port. For example, the communication module 2013 transmits and receives data through the communication port 2033 to and from the drive 2002, steering 2003, accelerator pedal 2004, brake pedal 2005, shift lever 2006, left and right front wheels 2007, left and right rear wheels 2008, axle 2009, microprocessor 2031 in the electronic control 2010, memory (ROM, RAM) 2032, and sensor 2021 to 2028.

The communication module 2013 is a communication device that can be controlled by the microprocessor 2031 of the electronic controller 2010 and can communicate with an external device. For example, The communication module 2013 transmits and receives various kinds of information via radio communication with the external device. The communication module 2013 may be placed inside or outside the electronic control unit 2010. Examples of the external device may include a base station, a mobile station, and the like.

The communication module 2013 transmits a current signal coming from a current sensor and input to the electronic controller 2010 to an external device via radio communication. Further, the communication module 2013 transmits a rotation speed signal of a front wheel and a rear wheel acquired by the speed sensor 2022, a pressure signal of a front wheel and a rear wheel acquired by an air pressure sensor 2023, a speed signal of a vehicle acquired by a speed sensor 2024, an acceleration signal acquired by an acceleration sensor 2025, an accelerator pedal pressed-amount signal acquired by an accelerator pedal sensor 2029, a brake pedal pressed-amount signal acquired by a brake pedal sensor 2026, an operation signal of the shift lever acquired by a shift lever sensor 2027, and a detection signal acquired by an object detection sensor 2028 for detecting obstacles, vehicles, pedestrians, and the like input to the electronic controller 2010 to an external device via radio communication.

The communication module 2013 receives various information (traffic information, signal information, inter-vehicle information, and the like.) transmitted from the external device and displays on the information service unit 2012 provided in the vehicle. Further, the communication module 2013 stores various information received from the external device in a memory 2032 usable by the microprocessor 2031. Based on the information stored in the memory 2032, the microprocessor 2031 may control the drive 2002, the steering 2003, the accelerator pedal 2004, the brake pedal 2005, the shift lever 2006, the left and right front wheels 2007, the left and right rear wheels 2008, the axle 2009, the sensors 2021 to 2028, and the like provided in the vehicle 2001.

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

10 Radio communication system
20 NG-RAN
40 Network device
41 Network interface IF unit
43 User management unit
45 Position information processing unit
47 Control unit
50 Vehicle
100 gNB
110 Radio communication unit
120 Connection processing unit
130 Handover processing unit
140 Control unit
200 UE
210 Radio communication unit
220 Connection processing unit
230 Handover execution unit
240 Control unit
1001 Processor
1002 Memory
1003 Storage
1004 Communication device
1005 Input device
1006 Output device
1007 Bus
2001 Vehicle
2002 Drive unit
2003 Steering unit
2004 Axel pedal
2005 Brake pedal
2006 Shift lever
2007 Left and right front wheels
2008 Left and right rear wheels
2009 Axles
2010 Electronic control unit
2012 Information service unit
2013 Communication module
2021 Current sensor
2022 Rotational speed sensor
2023 Air pressure sensor
2024 Vehicle speed sensor
2025 Acceleration sensor
2026 Brake pedal sensor
2027 Shift lever sensor
2028 Object detection sensor
2029 Axel pedal sensor
2030 Operation support system unit
2031 Microprocessor
2032 Memory (ROM, RAM)
2033 Communication port

## Claims

1. A network device comprising:
a reception unit that receives, from a network, a message including subscriber information relating to a subscriber of a terminal for a transportation mobile communication system; and
a control unit that prioritizes processing relating to the terminal in a control plane over other terminals based on the subscriber information.

2. A radio base station comprising:
a reception unit that receives, from a terminal, a message including access information relating to access from the terminal for a transportation mobile communication system; and
a control unit that prioritizes processing relating to the terminal in a control plane over other terminals based on the access information.

3. The radio base station according to claim 2,
wherein the control unit prioritizes processing relating to a signaling radio bearer for the terminal over signaling radio bearers for the other terminals.

4. The radio base station according to claim 2,
wherein the control unit restricts access from the other terminals based on the access information.

5. The radio base station according to claim 2,
wherein the control unit prioritizes a random access procedure with the terminal over the other terminals based on the access information.

6. The radio base station according to claim 5, further comprising a transmission unit that transmits priority information indicating a priority of the random access procedure with the terminal to the terminal.
